# EUROPÄISCHE PATENTSCHRIFT

(11) **EP 3 440 403 B1**
(45) Veröffentlichungstag und Bekanntmachung des Hinweises auf die Patenterteilung: **31.03.2021**
(21) Anmeldenummer: 17715159.4
(22) Anmeldetag: 04.04.2017
(51) Int. Cl.: F21V 8/00, B29D 11/00

(54) **LICHTLEITER MIT LICHTUMLENKSTRUKTUREN**
LIGHT GUIDE WITH LIGHT DEFLECTION STRUCTURES
CONDUCTEUR LUMINEUX AVEC STRUCTURES DE DEVIATION DE LUMIERE

(30) Priorität: 04.04.2016 EP 16163636
(43) Veröffentlichungstag der Anmeldung: 13.02.2019
(73) Patentinhaber: WEIDPLAS GmbH, 8630 Rüti (CH)
(72) Erfinder: KINDL, Christoph, 66386 St. Ingbert (DE); QUIEN, Norbert, 66386 St. Ingbert (DE)
(74) Vertreter: Rutz, Andrea
(86) Internationale Anmeldenummer: PCT/EP2017/057928
(87) Internationale Veröffentlichungsnummer: WO 2017/174548

(56) Entgegenhaltungen:
- WO-A1-2015/116743
- WO-A2-2014/033686
- DE-A1-102009 051 534
- DE-U1- 29 917 623
- KR-A- 20100 048 981

## Beschreibung

### TECHNISCHES GEBIET

Die vorliegende Erfindung betrifft einen Lichtleiter, welcher eine Vielzahl von Lichtumlenkstrukturen aufweist. Derartige Lichtleiter werden in verschiedenen Anwendungsgebieten und insbesondere im Automobilbau zum Beispiel zur Herstellung eines beleuchtbaren Anzeige- oder Dekorelements verwendet.

### STAND DER TECHNIK

Lichtleiter dienen zum Transportieren von Licht und werden in den unterschiedlichsten Anwendungsgebieten verwendet. Der Lichtleiter leitet die von einer Lichtquelle ausgestrahlten Lichtstrahlen, welche zum Beispiel über eine Lichteinkoppelfläche in den Lichtleiter eingekoppelt werden, in seinem Inneren zu einer Lichtauskoppelfläche, über welche die Lichtstrahlen den Lichtleiter verlassen. Die Lichtstrahlen können den Lichtleiter dabei diffus in verschiedene Richtungen oder gezielt in eine bestimmte Richtung, zum Beispiel in Richtung eines Betrachters, verlassen, um eine entsprechend gewünschte Lichtwirkung zu erzielen.

Ein Anwendungsgebiet von Lichtleitern findet sich insbesondere im Automobilbau. So ist es bei Kraftfahrzeugen bekannt, im Innen- oder Aussenraum befindliche Bedien- und Betätigungselemente mit Anzeige- und Ausleuchtelementen zu versehen, die via einen Lichtleiter von einer dahinter angeordneten Lichtquelle beleuchtet werden, um die Erkennbarkeit der einzelnen Bedien- und Betätigungselemente insbesondere auch bei Nacht zu gewährleisten. Auch werden oft hinterleuchtbare und entsprechend mit einem Lichtleiter versehene Dekorelemente und Zierleisten verwendet, um zum Beispiel in Form einer Türeinstiegsleiste auf den Markennamen des Kraftfahrzeugs hinzuweisen, oder um einen speziellen Effekt zu bewirken und dabei die Wahrnehmung des Betrachters auf sich zu ziehen. Der Lichtleiter kann somit insbesondere dazu dienen, eine gleichmässige Ausleuchtung des bzw. der Anzeige- oder Dekorelemente zu erreichen.

Ein anderes Anwendungsgebiet betrifft zum Beispiel die Raumausleuchtung und die Raumbeleuchtung. Lichtleiter werden hier in Leuchten verwendet, um eine bestimmte gewünschte Abstrahlung des von einer oder mehreren Lichtquellen ausgestrahlten Lichts zu erreichen. Je nach Anwendung kann die gewünscht Abstrahlung gezielt und insbesondere fokussiert in eine bestimmte Richtung erfolgen oder diffus in unterschiedliche Richtungen.

Um die Lichtstrahlen möglichst gleichmässig und verlustfrei zu einer Lichtauskoppelfläche zu leiten, wird in der DE 10 2014 216 780 vorgeschlagen, an der der Lichtauskoppelfläche gegenüberliegenden Aussenfläche des Lichtleiters eine Vielzahl von Lichtumlenkstrukturen in Form von Erhebungen und Vertiefungen vorzusehen. Eine Beschädigung der mit den Lichtumlenkstrukturen versehenen Oberfläche des Lichtleiters führt jedoch zu einer veränderten Abstrahlcharakteristik des Lichtleiters.

In der DE 299 17 623 wird ein Lichtleiter mit Lichtumlenkstrukturen offenbart, die im Inneren des Lichtleiters angeordnet sind. Die Lichtumlenkstrukturen werden dabei mittels Laserbearbeitung durch lokale Aufschmelzung des Polymermaterials des Lichtleiters erzeugt.

Die WO 2015/116743 A1 und die KR 2010 0048981 A offenbaren jeweils Lichtleiter, in deren Inneren mittels eines Lasers eine Vielzahl von Streustrukturen erzeugt werden, um das von einer Leuchtquelle eingestrahlte Licht zu streuen.

### DARSTELLUNG DER ERFINDUNG

Es ist eine Aufgabe der vorliegenden Erfindung, einen bzgl. Beschädigungen unempfindlichen Lichtleiter anzugeben, welcher eine effiziente und einfach einstellbare Lichtauskopplung ermöglicht.

Zur Lösung dieser Aufgabe wird ein Lichtleiter vorgeschlagen, wie er in Anspruch 1 angegeben ist. Vorteilhafte Ausgestaltungen der Erfindung sind in den abhängigen Ansprüchen angegeben.

Die vorliegende Erfindung stellt also einen Lichtleiter zur Verfügung mit einer Vielzahl von Lichtumlenkstrukturen, die im Inneren des Lichtleiters angeordnet sind. Die Lichtumlenkstrukturen weisen jeweils einen langgestreckten Grundkörper auf, welcher entlang seiner Längsrichtung um ein Vielfaches grösser dimensioniert ist als in die senkrecht zu dieser Längsrichtung stehenden Richtungen.

Es hat sich gezeigt, dass Lichtstrahlen, welche insbesondere seitlich, das heisst aus einer im Wesentlichen senkrecht zur Längsrichtung der Lichtumlenkstrukturen stehenden Richtung, auf eine der Lichtumlenkstrukturen auftreffen, eine Umlenkung zur Längsrichtung der Lichtumlenkstruktur hin erfahren. Konkret wird das Licht dabei jeweils zur Längsachse des Grundkörpers hin umgelenkt, welche sich zentral in Längsrichtung durch den Grundkörper hindurch erstreckt.

Durch das Vorsehen einer Vielzahl von derartigen Lichtumlenkstrukturen in einem Lichtleiter kann somit eine gezielte Lichtumlenkung des in den Lichtleiter eingestrahlten Lichts in eine oder mehrere bestimmte Richtungen erreicht werden. Das Licht kann dadurch in eine oder mehrere einstellbare Richtungen aus dem Lichtleiter ausgekoppelt werden. Je nach Ausrichtung und Lage der Lichtumlenkstrukturen kann die Lichtauskopplung derart eingestellt werden, dass sie zum Beispiel fokussiert aus dem Lichtleiter in eine bestimmte Richtung oder diffus in einen bestimmten Richtungsbereich erfolgt.

Der Grundkörper der Lichtumlenkstrukturen ist stabförmig ausgebildet. Entlang seiner Längsrichtung ist der Grundkörper somit um ein Vielfaches grösser dimensioniert als in alle senkrecht zu dieser Längsrichtung stehenden Richtungen. Vorteilhaft ist er um einen Faktor von zumindest 3, vorteilhafter von zumindest 5 und noch vorteilhafter von zumindest 10 entlang seiner Längsrichtung grösser bemessen als in die an irgendeiner Stelle entlang seiner Längserstreckung senkrecht dazu stehenden Richtungen. Es wurde festgestellt, dass die Lichtauskoppelung, insbesondere die gezielte Lichtauskopplung, aus dem Lichtleiter je effizienter wird, desto langgestreckter die Grundkörper der Lichtumlenkstrukturen sind.

Da die Lichtumlenkstrukturen im Inneren des Lichtleiters angeordnet sind, hat eine Beschädigung der Lichtleiteroberfläche keinen oder kaum einen Einfluss auf die Funktion des Lichtleiters, was dessen Lichtabstrahlcharakteristik angeht. Die Lichtumlenkstrukturen sind dabei vollständig im Inneren des Lichtleiters angeordnet, das heisst komplett vom Material des Lichtleiters umgeben.

Die Lichtumlenkstrukturen sind durch eine lokale Aufschmelzung des Materials des Lichtleiters hergestellt. Das Material des Lichtleiters wird zur Herstellung der Lichtumlenkstrukturen also an den entsprechenden Stellen mittels Wärmeeinwirkung aufgeschmolzen und wieder abgekühlt. Es wird dadurch an den jeweiligen Stellen eine lokale Strukturveränderung des Lichtleitermaterials bewirkt, wodurch die Lichtumlenkstrukturen gebildet werden. Das Material des Lichtleiters wird vorzugsweise bei der Herstellung der Lichtumlenkstrukturen aber nicht karbonisiert.

Beim Material des Lichtleiters handelt es sich um Kunststoff. Vorzugsweise ist der Lichtleiter zudem aus einem transparenten Material hergestellt. Es kann sich beim Kunststoff beispielsweise um Polymethylmethacrylat (PMMA), Polycarbonat (PC), Polyurethan (PU), Polyurea (PUA) oder Polymethacrylmethylimid (PMMI) handeln. Beim Elastomer kann es sich beispielsweise um Silikon handeln. Je nachdem welche Art von Material für den Lichtleiter verwendet wird, nehmen die erzeugten Lichtumlenkstrukturen unterschiedliche Formen an, welche für bestimmte Anwendungen bevorzugt sein können.

Beim Lichtleiter kann es sich um eine Folie handeln. Die Folie kann insbesondere aus PMMA oder PC hergestellt sein. Die Dicke der Folie ist vorteilhaft 1.8 mm oder geringer, noch vorteilhafter 1.5 mm oder geringer, noch vorteilhafter 1.2 mm oder geringer, noch vorteilhafter 1 mm oder geringer, noch vorteilhafter 0.8 mm oder geringer, noch vorteilhafter 0.75 mm oder geringer, noch vorteilhafter 0.6 mm oder geringer, insbesondere 0.5 mm, noch vorteilhafter 0.4 mm oder geringer, insbesondere 0.375 mm, am vorteilhaftesten 0.3 mm oder geringer, insbesondere 0.2 mm. Folien zeichnen sich im Vergleich zu einem Spritzgussbauteil im Allgemeinen durch eine bessere Biegsamkeit und Flexibilität aus.

Bevorzugt sind mehrere der Lichtumlenkstrukturen nebeneinander in einer gemeinsamen Ebene des Lichtleiters angeordnet und weisen dabei vorteilhaft alle dieselbe Orientierung auf. Es können zwei oder mehrere Ebenen innerhalb des Lichtleiters vorhanden sein, in welchen jeweils eine Vielzahl von Lichtumlenkstrukturen in jeweils vorteilhaft derselben Orientierung angeordnet sind. Mittels eines Lichtleiters mit in zwei oder mehreren Ebenen des Lichtleiters angeordneten Lichtumlenkstrukturen können verschiedenste Lichteffekte erzeugt werden.

Erfindungsgemäß sind die Lichtumlenkstrukturen mittels eines Lasers hergestellt. Das Laserlicht bewirkt in diesem Fall an den entsprechenden Stellen im Lichtleiter jeweils einen lokalen Wärmeeintrag, welcher zu einer Materialaufschmelzung führt. Die Herstellung der Lichtumlenkstrukturen mittels eines Lasers ist nicht nur besonders einfach, sondern kann auch einfach derart durchgeführt werden, dass die erwähnten langgestreckten Grundkörper sowie die nachstehend angegebenen lokalen Verdickungen und Fahnen entstehen. Bei der Herstellung der Lichtumlenkstrukturen mittels eines Lasers kann gewährleistet werden, dass das Material zwar lokal aufgeschmolzen, nicht aber karbonisiert wird.

Die vorliegende Erfindung bezieht sich somit ausserdem auf ein Verfahren entsprechend Anspruch 13 zur Herstellung eines Lichtleiters, der wie angegeben ausgebildet ist. Dabei wird der Lichtleiter mit einem Laser bestrahlt, um im Inneren des Lichtleiters eine Vielzahl von Lichtumlenkstrukturen mit jeweils einem langgestreckten Grundkörper auszubilden.

Um eine optimale Form der Lichtumlenkstrukturen zu erreichen, werden diese mit Hilfe von grünem Laserlicht und/oder von Infrarot-Laserlicht hergestellt. Erfindungsgemäß weist das grüne Laserlicht eine Wellenlänge im Bereich von 490 nm - 575 nm, insbesondere von ca. 532 nm, auf. Das Infrarot-Laserlicht weist eine Wellenlänge im Bereich von 780 nm - 1400 nm, vorteilhafter im Bereich von 1000 nm - 1100 nm, insbesondere von ca. 1030 nm, auf. Infrarot-Laser sind in der Anschaffung günstig und besonders prozessstabil. Vorteilhaft wird ein Ultrakurzpulslaser, bevorzugter ein Femtosekundenlaser oder ein Pikosekundenlaser, verwendet.

Bevorzugt ist der Grundkörper der Lichtumlenkstrukturen jeweils im Wesentlichen rotationssymmetrisch, insbesondere vollständig rotationssymmetrisch. Die Lichtumlenkstrukturen sind dadurch einfacher herstellbar, und die durch die Lichtumlenkstrukturen bewirkte Lichtumlenkung ist einfacher vorausrechenbar. Es kann insbesondere eine Leuchtdichtesimulationssoftware erstellt werden, um die Leuchtdichte an der Oberfläche und insbesondere an der Lichtauskoppelfläche des Lichtleiters vorauszuberechnen, bzw. um umgekehrt dazu ausgehend von einer gewünschten Oberflächenleuchtdichte die Anordnung und/oder Ausbildung der Lichtumlenkstrukturen innerhalb des Lichtleiters zu bestimmen. Auf diese Art und Weise kann sehr einfach eine beliebige gewünschte Leuchtdichteverteilung an der Lichtleiteroberfläche erzielt werden. Durch die Rotationssymmetrie des Grundkörpers ist die Längsachse der jeweiligen Lichtumlenkstruktur bestimmt, welche mit der Symmetrieachse übereinstimmt.

Unter dem Begriff "Leuchtdichte" wird das Verhältnis der Lichtstärke zur Grösse der sichtbaren leuchtenden Lichtauskoppelfläche verstanden, welche in Candela pro Quadratmeter der Lichtauskoppelfläche (cd/m²) angegeben wird.

Die Grundkörper weisen entlang ihrer Längsrichtung jeweils eine lokale Verdickung auf. Die lokale Verdickung ist entlang der Längsrichtung des Grundkörpers jeweils dezentral im Grundkörper angeordnet, das heisst nicht genau in der Mitte des Grundkörpers. Es hat sich gezeigt, dass ein überwiegender Grossteil der seitlich auf die Lichtumlenkstruktur einfallenden Lichtstrahlen in Richtung zur Längsachse des Grundkörpers hin umgelenkt wird.

Die Verdickung weist bevorzugt senkrecht zur Längsachse des Grundkörpers einen kreisförmigen Querschnitt auf. Die Verdickung ist in Bezug auf die Längsrichtung des Grundkörpers bei 15 - 35 % der gesamten Längserstreckung des Grundkörpers angeordnet. Der Durchmesser der Verdickung, gemessen in eine senkrecht zur Längsachse des Grundkörpers stehende Richtung, ist bevorzugt nicht grösser als 30 µm.

Vorteilhaft erstrecken sich die Grundkörper der Lichtumlenkstrukturen entlang ihrer jeweiligen Längsrichtung im Wesentlichen parallel, bevorzugt vollständig parallel zueinander. Es kann dadurch beispielsweise erreicht werden, dass das in den Lichtleiter eingestrahlte Licht zu einem überwiegenden Grossteil aus zwei zueinander gegenüberliegenden, bevorzugt ebenen Aussenflächen des Lichtleiters ausgekoppelt wird.

In einer bevorzugten Ausführungsform weist zumindest eine Lichtumlenkstruktur zumindest eine, insbesondere zwei oder mehr als zwei Fahnen auf, welche am Grundkörper angebracht sind, bevorzugt weisen sämtliche Lichtumlenkstrukturen jeweils zumindest eine, insbesondere zwei oder mehr als zwei Fahnen auf, welche am Grundkörper angebracht sind. Vorteilhaft sind die eine bzw. mehreren Fahnen bei allen Lichtumlenkstrukturen gleich orientiert. Dies bietet den Vorteil, dass das Licht besonders homogen vom Lichtleiter abgestrahlt wird. Der Ausdruck Fahne bezieht sich auf die Form der Lichtumlenkstrukturen und ist zu verstehen als ein an der Grundstruktur angebrachter lappenförmiger Teil. Die Fahne bzw. Fahnen haben bevorzugt insgesamt eine annähernd viereckige Form, wobei sie sich vorwiegend entlang von zwei Dimensionen in einer Fläche erstrecken, welche insbesondere eben sein kann. In die dritte, zu dieser Fläche senkrecht stehende Dimension weist die zumindest eine Fahne in der Regel eine Dicke auf, welche im Vergleich zu den Seitenlängen der Fahne in der Fläche entlang der ersten beiden Dimensionen um ein Vielfaches kleiner dimensioniert ist. Bevorzugt ist die zumindest eine Fahne höchstens 5 µm dick. Bevorzugt ist die zumindest eine Fahne entlang einer ihrer vier Seiten, insbesondere entlang einer gesamten Seitenlänge, mit dem Grundkörper verbunden.

Durch das Vorsehen der Fahne bzw. der Fahnen kann die für die Lichtumlenkung relevante Fläche der Lichtumlenkstruktur wesentlich vergrössert werden, so dass pro Lichtumlenkstruktur erheblich mehr Licht umgelenkt werden kann. Die Fahne(n) dienen also dazu, die Effizienz der Lichtumlenkung zu verbessern.

Vorteilhaft erstreckt sich zumindest eine Fahne der zumindest einen Fahne über 1/3 bis 2/3 der gesamten Längserstreckung des Grundkörpers. Die zumindest eine Fahne kann dabei insbesondere entlang einer ihrer Seiten über einen Bereich von 1/3 bis 2/3 der gesamten Längserstreckung des Grundkörpers mit diesem verbunden sein. Die Breite der Fahne, gemessen in eine senkrecht zur Längsachse des Grundkörpers stehende Richtung, beträgt bevorzugt höchstens 30 µm.

Vorteilhaft ist der Grundkörper einteilig oder mehrteilig, bevorzugt einteilig ausgebildet. Falls der Grundkörper mehrteilig ausgebildet ist, so ist der Grundkörper bevorzugt wenigstens zweiteilig aufgebaut. Falls der Grundkörper wenigstens zweiteilig aufgebaut ist, so sind die wenigstens zwei Teile des Grundkörpers bevorzugt voneinander beabstandet. Bevorzugt sind die wenigstens zwei Teile mittels wenigstens einer Fahne miteinander verbunden. Die Lichtumlenkstrukturen sind vorteilhaft jedoch jeweils als Ganzes einteilig ausgebildet, das heisst sie weisen keine voneinander beabstandeten Teile auf, die nicht durch ein anderes Teil derselben Lichtumlenkstruktur miteinander verbunden sind.

Bevorzugt, um eine besonders grosse, für die Lichtumlenkung relevante Fläche zu erreichen, sind jeweils zumindest zwei Fahnen am Grundkörper angebracht. Um die Oberfläche der Lichtumlenkstruktur im Hinblick auf die Lichtumlenkung zu maximieren, sind die beiden Fahnen vorteilhaft auf im Wesentlichen diametral einander gegenüberliegenden Seiten am Grundkörper angebracht und erstrecken sich insbesondere in einander entgegengesetzte radiale Richtungen vom Grundkörper weg.

In einer anderen, für bestimmte Anwendungen bevorzugten Ausführungsform weisen die Lichtumlenkstrukturen jeweils als Ganzes eine langgestreckte und im Wesentlichen rotationssymmetrische, insbesondere vollständig rotationssymmetrische Form auf. Die Lichtumlenkstrukturen weisen somit in dieser Ausführungsform insbesondere keine am Grundkörper angebrachten Fahnen auf, sondern werden vorteilhaft ausschliesslich durch den Grundkörper gebildet. Eine derartige Ausgestaltung der Lichtumlenkstrukturen führt zu einer homogenen Leuchtdichteverteilung auf dem Lichtleiter und damit zu einer besonders gleichmässigen Lichtabstrahlung.

Der Lichtleiter weist bevorzugt eine Lichtauskoppelfläche auf, über welche das in den Lichtleiter von einer Lichtquelle eingestrahlte Licht nach aussen hin abgestrahlt wird. Vorzugsweise stehen die Grundkörper der Lichtumlenkstrukturen mit ihren Längsrichtungen, das heisst Längsachsen, jeweils im Wesentlichen senkrecht zu dieser Lichtauskoppelfläche.

Um eine gute Ausleuchtung erreichen zu können, weisen die Grundkörper der Lichtumlenkstrukturen bevorzugt jeweils eine Längserstreckung von mindestens 100 µm, noch bevorzugter von mindestens 300 µm, auf. Vorteilhaft sind die Lichtumlenkstrukturen bzw. deren Grundkörper jedoch höchstens 800 µm lang. Lichtumlenkstrukturen, welche eine grössere Längserstreckung aufweisen, werden für das menschliche Auge sichtbar, was in den meisten Fällen nicht erwünscht ist. Bzgl. der Sichtbarkeit für das menschliche Auge wird hier sowie nachstehend jeweils von einem Abstand von ca. 30 cm - 70 cm von der Lichtauskoppelfläche ausgegangen. Unsichtbar sind die Lichtumlenkstrukturen dann, wenn im unbeleuchteten Zustand der Bereich des Lichtleiters mit den Lichtumlenkstrukturen aus einer solchen Distanz für einen Betrachter kaum von einem Bereich des Lichtleiters unterscheidbar ist, der keine Lichtumlenkstrukturen aufweist. Insbesondere sind die einzelnen Lichtumlenkstrukturen dann kaum zu erkennen.

Vorteilhaft sind die Lichtumlenkstrukturen in regelmässigen oder unregelmässigen Abständen, bevorzugt in regelmässigen Abständen, zueinander im Lichtleiter angeordnet. Die Abstände zwischen den Lichtumlenkstrukturen betragen bevorzugt jeweils mindestens 50 µm, bevorzugter jeweils mindestens 80 µm, insbesondere mindestens 100 µm. Je grösser die Abstände zwischen den einzelnen Lichtumlenkstrukturen sind, desto schwerer sind sie von Auge im unbeleuchteten Zustand des Lichtleiters im Lichtleiter erkennbar. Bei Abständen von weniger als 50 µm sind die Strukturen unabhängig von der eingesetzten Laserenergie zu deren Herstellung sichtbar. Um eine ausreichende Lichtumlenkung und somit Ausleuchtung im Bereich der Lichtauskoppelfläche zu gewährleisten, sollten die Lichtumlenkstrukturen jedoch Abstände zwischen einander von bevorzugt höchstens 400 µm, bevorzugter von höchstens 200 µm, insbesondere von höchstens 150 µm haben.

Vorteilhaft weist der Grundkörper der Lichtumlenkstrukturen des Lichtleiters senkrecht zur seiner Längsrichtung, insbesondere im Bereich einer allfällig vorhandenen Verdickung des Grundkörpers, eine kreisförmige Querschnittsfläche mit einem Mittelpunkt M auf, wobei ein maximaler Durchmesser d der kreisförmigen Querschnittsfläche des Grundkörpers einer jeweiligen Lichtumlenkstruktur 30 Mikrometer oder weniger beträgt, und wobei der Abstand A zwischen den Mittelpunkten M der kreisförmigen Querschnittsfläche des Grundkörpers der Lichtumlenkstrukturen des Lichtleiters wenigstens 50 Mikrometer beträgt.

Bevorzugt erfüllt der Abstand A folgendes 1. Kriterium:
Der Abstand A ist grösser als dreimal der maximale Durchmesser d eines Grundkörpers wenigstens einer Lichtumlenkstruktur des Lichtleiters.

Vorteilhaft erfüllt der Abstand A alternativ oder zusätzlich zum 1. Kriterium folgendes 2. Kriterium:
Der Mittelpunkt der kreisförmigen Querschnittsfläche des Grundkörpers einer jeweiligen Lichtumlenkstruktur des Lichtleiters zum Mittelpunkt der kreisförmigen Querschnittsfläche der Grundkörper sämtlicher weiteren Lichtumlenkstrukturen des Lichtleiters weist einen Abstand A auf, wobei der Abstand A grösser als der maximale Durchmesser d der kreisförmigen Querschnittsfläche des Grundkörpers der jeweiligen Lichtumlenkstruktur geteilt durch den Wert 0.33 ist.

Diese vorteilhafte Ausführungsform bietet den Vorteil, dass die Lichtumlenkstrukturen des Lichtleiters im unbeleuchteten Zustand des Lichtleiters von Auge kaum sichtbar sind.

Besonders vorteilhaft weist der Grundkörper der Lichtumlenkstrukturen senkrecht zur seiner Längsrichtung, insbesondere im Bereich einer allfällig vorhandenen Verdickung des Grundkörpers, eine kreisförmige Querschnittsfläche auf, das heisst eine Querschnittsfläche, welche von einer äusseren Begrenzungslinie umrandet ist, die zumindest annähernd, insbesondere im Wesentlichen einen Kreis bildet. Diese äussere Begrenzungslinie weist insbesondere einen maximalen Durchmesser d auf.

Die Lichtumlenkstrukturen können derart im Lichtleiter angeordnet sein, dass das von den Lichtumlenkstrukturen ausgekoppelte Licht als ein Buchstabe, ein Schriftzug, eine Nummer und/oder ein Symbol erscheint. Die Lichtumlenkstrukturen können, um diesen Effekt zu erreichen, entsprechend in der Form eines Buchstabens, eines Schriftzugs, einer Nummer und/oder eines Symbols im Lichtleiter angeordnet sein.

Gemäss einer Weiterbildung der Erfindung weisen die verschiedenen Lichtumlenkstrukturen unterschiedliche Geometrien, insbesondere unterschiedliche Längserstreckungen, auf, so dass das via die Lichtauskoppelfläche des Lichtleiters ausgekoppelte Licht eine Helligkeitsverteilung aufweist, welche über die Lichtauskoppelfläche variiert. Mit anderen Worten wird die variierende Helligkeitsverteilung aufgrund der unterschiedlichen Geometrien, insbesondere Längserstreckungen der Grundkörper der Lichtumlenkstrukturen bewirkt. Auch unterschiedliche Anzahl von Fahnen und/oder Grössen der Fahnen und/oder der Verdickungen können zu unterschiedlichen Helligkeitswerten führen. Die Lichtumlenkstrukturen können also zum Beispiel insgesamt ein Grauwertbild darstellen und dennoch in regelmässigen Abständen zueinander im gesamten Lichtleiter verteilt sein. Die unterschiedlichen Grauwerte können insbesondere mittels unterschiedlichen Energieeinträgen bei der Herstellung der einzelnen Lichtumlenkstrukturen mittels eines Lasers erreicht werden. Unterschiedliche optische Effekte können aber auch durch das Anordnen der Lichtumlenkstrukturen auf unterschiedlichen Höhen innerhalb des Lichtleiters, durch unterschiedliche Neigungen der Lichtumlenkstrukturen relativ zur Lichtauskoppelfläche des Lichtleiters oder durch regelmässige und/oder unregelmässige Abstände zwischen den Lichtumlenkstrukturen erreicht werden.

Der erfindungsgemässe Lichtleiter kann zur Herstellung eines beliebigen Bauteils verwendet werden, welches zusätzlich zum Lichtleiter weitere Elemente aufweisen kann. So kann ein Bauteil zusätzlich zum Lichtleiter zum Beispiel eine Deckschicht aufweisen. Die Deckschicht kann am Lichtleiter angespritzt sein oder beispielsweise als transparente Folie ausgebildet sein, wobei die Deckschicht als Schutz des Lichtleiters gegen äussere Einflüsse dienen kann. Die Deckschicht kann insbesondere koloriert sein, um eine farbige Ausleuchtung zu bewirken. Alternativ oder zusätzlich kann eine Beschichtung am Lichtleiter angebracht sein, um die entsprechenden oder andere Effekte zu erzielen. Das Anbringen einer Beschichtung ist möglich, da die Lichtumlenkstrukturen im Inneren des Lichtleiters angeordnet sind und somit durch das Beschichten nicht beschädigt werden. Auch die Herstellung eines Bauteils mit einem derartigen Lichtleiter im Zweikomponentenspritzguss ist möglich, da die Lichtumlenkstrukturen aufgrund ihrer Anordnung im Inneren des Lichtleiters beim Spritzvorgang nicht beschädigt werden. Das Bauteil kann zusätzlich zum Lichtleiter auch eine mit Durchbrüchen versehene Dekorplatte aufweisen, welche den Lichtleiter abdeckt und aufgrund der Anordnung und Form der Durchbrüche zum Beispiel die Anzeige von Buchstaben, Nummern oder Symbolen bewirken kann. Die Dekorplatte kann insbesondere aus Metall hergestellt sein.

Gemäss einer Weiterbildung der Erfindung ist der erfindungsgemässe Lichtleiter für den Automobilbau vorgesehen. Er kann zur Herstellung eines hinterleuchtbaren Dekorelements, einer Zierleiste und insbesondere zur Herstellung einer Einstiegsleiste verwendet werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Seitenansicht sowie mehrere Querschnittansichten einer schematisch dargestellten Lichtumlenkstruktur mit einteiligem Grundkörper eines erfindungsgemässen Lichtleiters;
- Fig. 2: eine perspektivische Ansicht von schräg oben der Lichtumlenkstruktur der Fig. 1;
- Fig. 3: eine perspektivische Ansicht von schräg oben von drei schematisch dargestellten Lichtumlenkstrukturen eines erfindungsgemässen Lichtleiters;
- Fig. 4: eine perspektivische Ansicht eines schematisch dargestellten Bauteils mit einem erfindungsgemässen Lichtleiter sowie mit einem Laser zur Herstellung von Lichtumlenkstrukturen im Lichtleiter und mit einer LED-Lichtquelle zum Einkoppeln von Licht in den Lichtleiter;
- Fig. 5: eine mikroskopische Schnittansicht eines realen, erfindungsgemässen Lichtleiters, auf der Höhe der Verdickungen der Lichtumlenkstrukturen;
- Fig. 6: eine mikroskopische Schnittansicht in einer senkrecht zur Schnittansicht der Fig. 5 stehenden Ebene durch den Lichtleiter der Fig. 5, durch die Grundkörper von mehreren Lichtumlenkstrukturen; sowie
- Fig. 7: eine Seitenansicht einer schematisch dargestellten Lichtumlenkstruktur mit zweiteiligem Grundkörper eines erfindungsgemässen Lichtleiters.

### BESCHREIBUNG BEVORZUGTER AUSFÜHRUNGSFORMEN

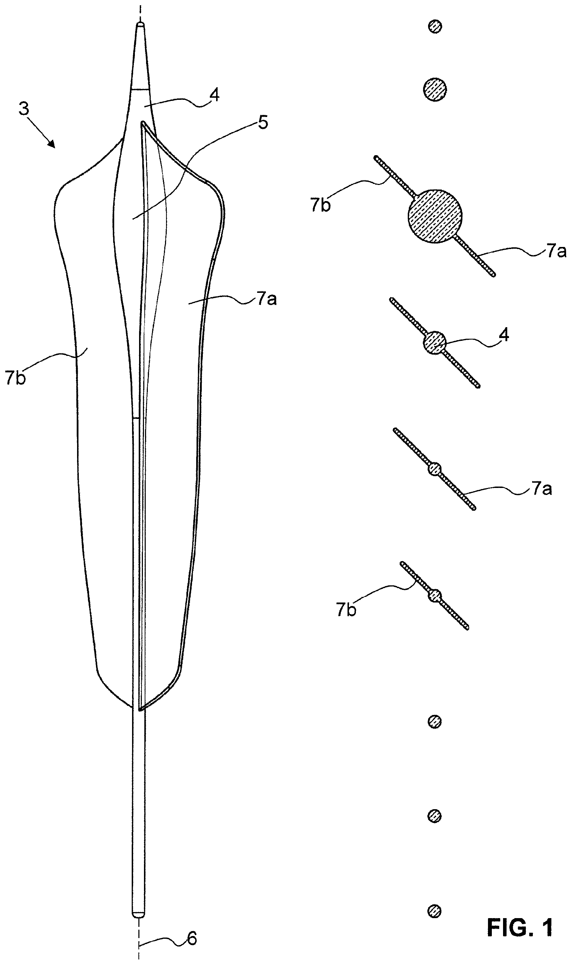

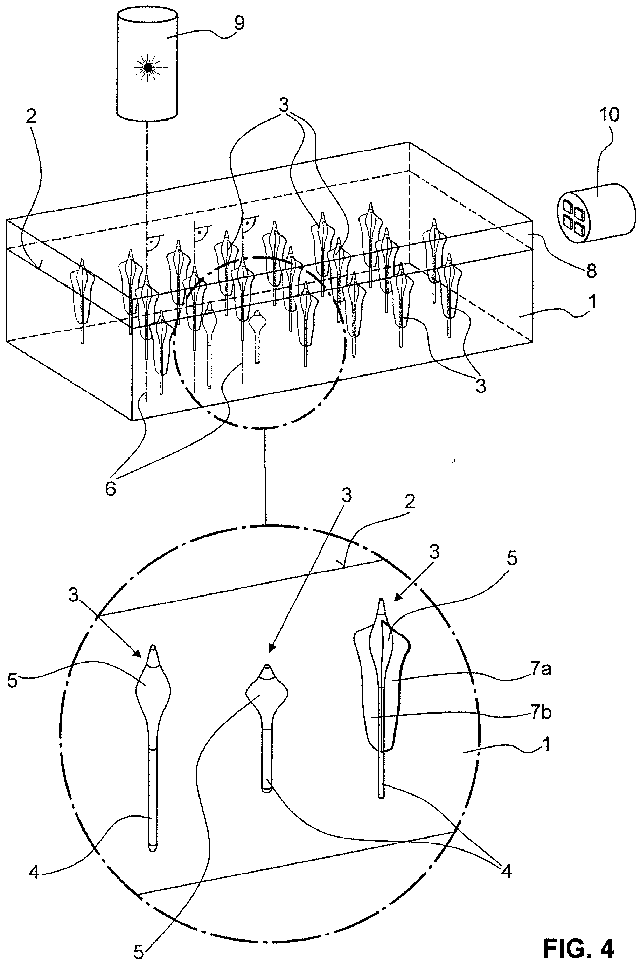

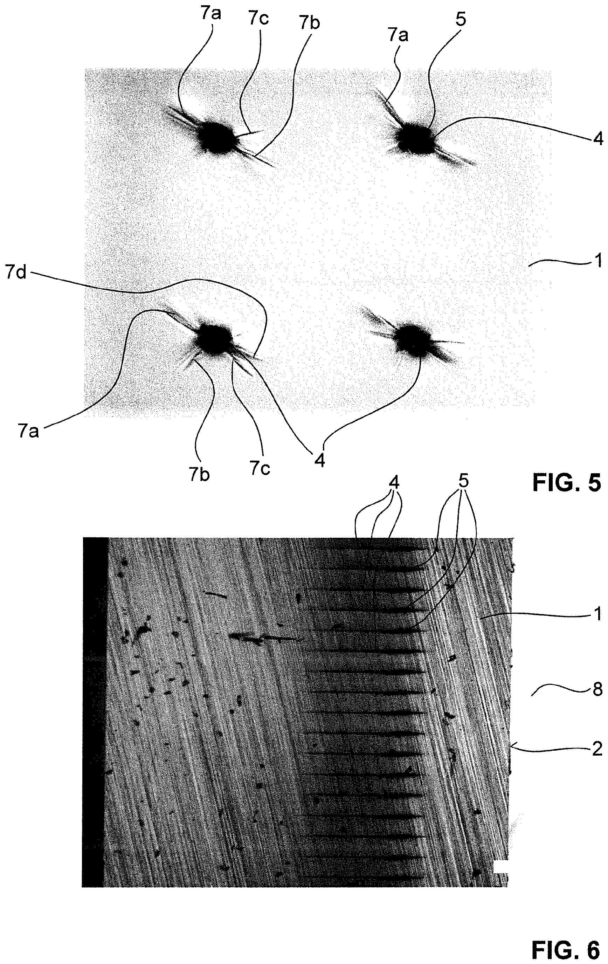

In den Figuren 1 bis 3 sind Lichtumlenkstrukturen 3 eines erfindungsgemässen Lichtleiters gezeigt. Die Figur 4 zeigt ein Bauteil mit einem erfindungsgemässen Lichtleiter 1. Sowohl bei den Figuren 1 bis 3 als auch bei der Figur 4 handelt es sich jeweils um schematische Abbildungen. In den Figuren 5 und 6 sind mikroskopisch erstellte Schnittansichten eines realen, erfindungsgemässen Lichtleiters 1 gezeigt, wobei jeweils eine Vielzahl von Lichtumlenkstrukturen 3 erkennbar sind.

In den Figuren sind jeweils Elemente, welche die gleiche oder eine ähnliche Funktion und Wirkung haben, mit denselben Bezugszeichen versehen.

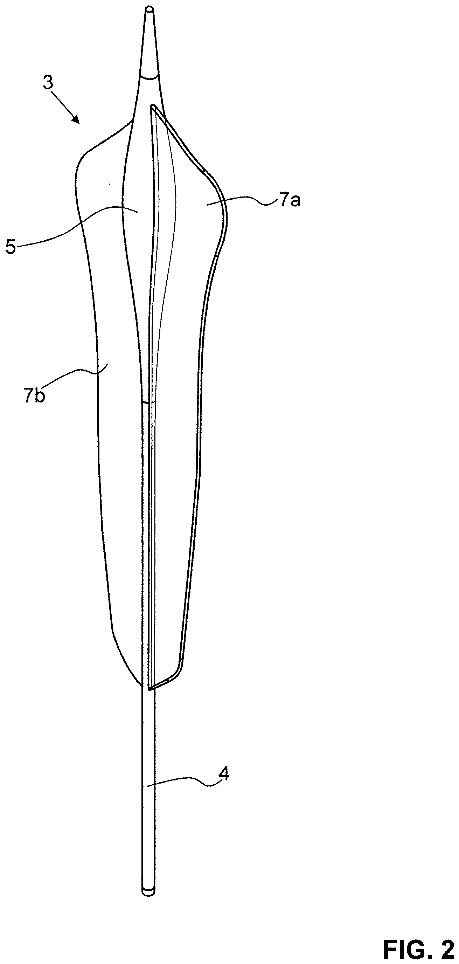

In den Figuren 1 und 2 ist eine einzelne Lichtumlenkstruktur 3 gezeigt. Auf der linken Seite der Figur 1 ist eine Seitenansicht der Lichtumlenkstruktur 3 dargestellt, und auf der rechten Seite sind auf den jeweils entsprechenden Höhen Querschnittsansichten in senkrecht dazu stehenden Ebenen gezeigt. Die dreidimensionale Form der Lichtumlenkstruktur 3 ist insbesondere in der Figur 1 somit gut erkennbar.

Die Lichtumlenkstruktur 3 weist einen stabförmigen, langgestreckten und einteiligen Grundkörper 4 auf, welcher im Wesentlichen rotationssymmetrisch ausgebildet ist und dadurch eine Längsachse 6 des Grundkörpers 4 und der Lichtumlenkstruktur 3 definiert, die mit der Symmetrieachse des Grundkörpers 4 übereinstimmt.

Der Grundkörper 4 weist ausser im Bereich einer Verdickung 5 entlang seiner gesamten Längserstreckung eine im Wesentlichen konstante Dicke auf. Die Verdickung 5 ist bei 15 - 35 % der gesamten Längserstreckung des Grundkörpers 4 angeordnet.

Am Grundkörper 4 sind auf diametral gegenüberliegenden Seiten zwei Fahnen 7a und 7b angebracht. Die beiden Fahnen 7a und 7b erstrecken sich jeweils in radialer Richtung vom Grundkörper 4 gleich weit nach aussen hin. Jede der Fahnen 7a und 7b hat eine flache, im Wesentlichen viereckige Form und ist dementsprechend von vier Aussenseiten begrenzt, von denen eine entlang ihrer gesamten Länge mit dem Grundkörper 4 verbunden ist. Die an diese mit dem Grundkörper 4 angrenzenden oberen und unteren Seiten erstrecken sich jeweils senkrecht zur Längsachse 6 des Grundkörpers 4 nach aussen und leicht schräg zueinander hin.

Die grösste Breite weisen die Fahnen 7a, 7b jeweils in ihrem oberen Bereich auf, welcher ungefähr auf der Höhe der Verdickung 5 angeordnet ist. Nach unten hin, das heisst in Richtung von der Verdickung 5 weg, nimmt die Breite der Fahnen 7a, 7b jeweils etwas ab.

Die Dicke der Fahnen 7a, 7b, welche sich jeweils als Ganzes entlang einer ebenen Fläche erstrecken, ist um ein Vielfaches kleiner als die Seitenlängen der Fahnen 7a, 7b. Die Fahnen 7a, 7b weisen jeweils eine insgesamt im Wesentlichen konstante Dicke auf.

Entlang der Längsachse 6 sind die beiden Fahnen 7a und 7b auf derselben Höhe angeordnet und erstrecken sich mit ihren mit dem Grundkörper 4 verbundenen Seiten über 1/3 bis 2/3 der gesamten Längserstreckung des Grundkörpers 4

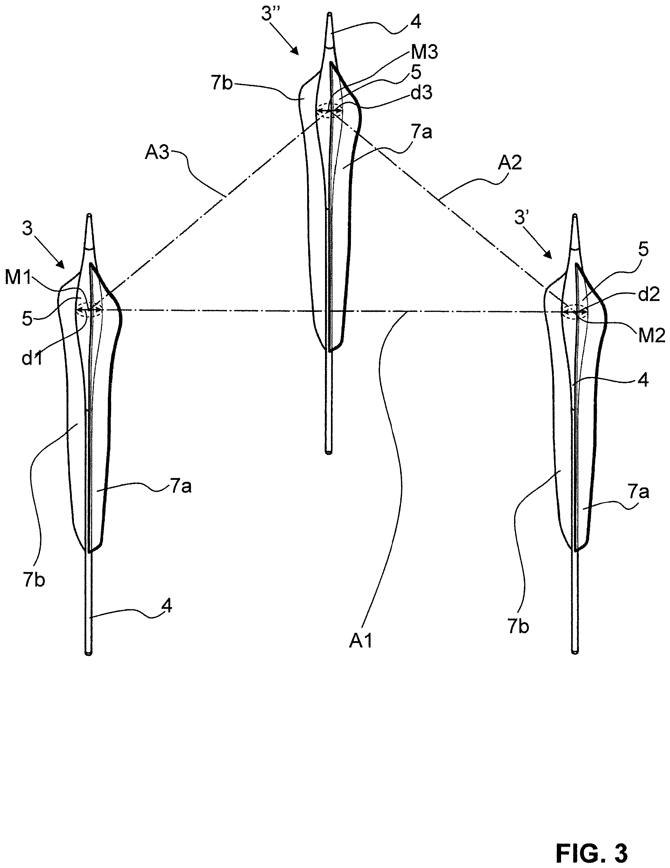

In der Figur 3 sind zur Erläuterung einer bevorzugten geometrischen Anordnung drei Lichtumlenkstrukturen 3, 3', 3", welche im vorliegenden Falle alle einteilig ausgebildet sind, dargestellt, welche in einem erfindungsgemässen Lichtleiter vorgesehen sind. Die drei Lichtumlenkstrukturen 3, 3', 3" erstrecken sich mit ihren Längsachsen 6 parallel zueinander und sind auf derselben Höhe im Lichtleiter angeordnet.

Im Bereich der Verdickung 5 weisen die Lichtumlenkstrukturen 3, 3', 3" jeweils einen maximalen Durchmesser d bzw. die jeweiligen maximalen Durchmesser d1, d2, d3 auf, der bevorzugt höchstens 30 µm beträgt. Gemessen wird der maximale Durchmesser d jeweils senkrecht zur Längsachse 6. In den Bereichen ausserhalb der Verdickung 5 ist der Durchmesser des Grundkörpers 4 halb so gross oder noch kleiner.

Durch die Lage des maximalen Durchmessers d entlang der Längserstreckung des Grundkörpers 4 ist jeweils ein Mittelpunkt Ml, M2 bzw. M3 der Verdickung 5 definiert. In einer senkrecht zur Längsachse 6 stehenden Querschnittansicht auf der Höhe des Mittelpunkts Ml, M2 bzw. M3 bildet die Verdickung 5 jeweils eine kreisförmige Fläche, welche in der Figur 3 jeweils durch eine gestrichelte Linie angedeutet ist.

Es hat sich gezeigt, dass die Lichtumlenkstrukturen 3, 3', 3" dann im unbeleuchteten Zustand des Lichtleiters für einen Betrachter kaum sichtbar sind, wenn:
- die Abstände A1, A2 und A3 zwischen den jeweiligen Mittelpunkten M1, M2 und M3 der Lichtumlenkstrukturen 3, 3', 3" 50 µm oder mehr betragen (d.h. A1 ≥ 50 µm, A2 ≥ 50 µm und A3 ≥ 50 µm), und
- die Durchmesser d1, d2, d3 höchstens 30 µm betragen (d.h. d1 ≤ 30 µm, d2 ≤ 30 µm, d3 ≤ 30 µm).

Bevorzugt erfüllen die Abstände A1, A2, A3 noch folgendes 1. Kriterium:
Die Abstände A1, A2 und A3 sind jeweils grösser als dreimal der Durchmesser wenigstens eines Durchmessers der Durchmesser d1, d2, d3.

Bevorzugt erfüllen die Abstände A1, A2, A3 zusätzlich oder alternativ zum 1. Kriterium noch folgendes 2. Kriterium:
Der Mittelpunkt einer jeweiligen Lichtumlenkstruktur 3, 3' oder 3" (z.B. M1) zum Mittelpunkt sämtlicher weiteren Lichtumlenkstrukturen des Lichtleiters (M2, M3) weist einen Abstand A (M1 zu M2: Abstand A1 / M1 zu M3: Abstand A3) auf, wobei der Abstand A (A1, A3) grösser als der Durchmesser d der jeweiligen Lichtumlenkstruktur 3, 3' oder 3" (Durchmesser dl) geteilt durch den Wert 0.33 ist.
Mit anderen Worten formuliert, werden im Falle von drei Lichtumlenkstrukturen bzw. im Falle der drei Lichtumlenkstrukturen 3, 3', 3" die Abstände A bzw. die Abstände A1, A2, A3 gemäss dem 2. Kriterium wie folgt berechnet:
- Die Lichtumlenkstruktur 3 wird als die oben genannte jeweilige Lichtumlenkstruktur betrachtet und somit sind die Lichtumlenkstrukturen 3', 3" die oben genannten weiteren Lichtumlenkstrukturen. Die Abstände A1 und A3 betragen somit jeweils mindestens den Durchmesser d1 der Lichtumlenkstruktur 3 geteilt durch 0.33.
- Die Lichtumlenkstruktur 3' wird als die oben genannte jeweilige Lichtumlenkstruktur betrachtet und somit sind die Lichtumlenkstrukturen 3, 3" die oben genannten weiteren Lichtumlenkstrukturen. Die Abstände A1, A2 betragen somit jeweils mindestens den Durchmesser d2 der Lichtumlenkstruktur 3' geteilt durch 0.33
- Die Lichtumlenkstruktur 3" wird als die oben genannte jeweilige Lichtumlenkstruktur betrachtet und somit sind die Lichtumlenkstrukturen 3, 3' die oben genannten weiteren Lichtumlenkstrukturen. Die Abstände A2, A3 betragen somit jeweils mindestens den Durchmesser d3 der Lichtumlenkstruktur 3" geteilt durch 0.33.

Wenn die maximalen Durchmesser der verschiedenen Lichtumlenkstrukturen 3, 3' und 3" jeweils ungefähr gleich gross sind, d.h. d1=d2=d3=d, müssen die Abstände A1, A2 und A3 gemäss dem 2. Kriterium jeweils grösser als dreimal den Durchmesser d sein (d.h. A1 ≥ 3d, A2 ≥ 3d und A3 ≥ 3d).

Die obenstehenden Angaben gelten sinngemäss für Lichtleiter mit wesentlich mehr als drei Lichtumlenkstrukturen 3 und insbesondere für Lichtleiter, bei denen die einzelnen Lichtumlenkstrukturen 3 jeweils gleich oder ähnlich ausgestaltet und dimensioniert sind.

Die Figur 4 zeigt oben ein Bauteil mit einem Lichtleiter 1 sowie einer Deckschicht 8, welche an einer Lichtauskoppelfläche 2 des Lichtleiters 1 angebracht ist und diese vollständig überdeckt. Die Deckschicht 8 kann an den Lichtleiter 1 angespritzt sein und aus einem anderen Material als der Lichtleiter 1 hergestellt sein. Das Bauteil kann somit insbesondere im Zweikomponentenspritzguss hergestellt sein, wobei das Material des Lichtleiters 1 die erste und dasjenige der Deckschicht 8 die zweite Komponente bildet. Bei der Deckschicht 8 kann es sich aber zum Beispiel auch um eine Folie oder eine Beschichtung handeln. Die Deckschicht 8 kann einen Schutz des Lichtleiters 1 vor externen Einflüssen bilden. Die Deckschicht 8 kann aber auch eine Kolorierung aufweisen, um die Abstrahlung von farbigem Licht zu ermöglichen. Des Weiteren ist möglich, dass die Deckschicht 8 die Funktion eines Diffusors hat, um eine diffuse Lichtabstrahlung zu bewirken und/oder die Sichtbarkeit der Lichtumlenkstrukturen 3 zu verringern. Vorzugsweise ist die Deckschicht 8 transparent ausgebildet.

Zur Herstellung der Vielzahl von in regelmässigen Abständen und parallel zueinander im Lichtleiter 1 angeordneten Lichtumlenkstrukturen 3, welche im vorliegenden Fall alle einteilig ausgebildet sind, wird ein Laser 9 verwendet. Dabei wird vom Laser 9 Laserlicht ausgestrahlt, um Energie in das Innere des Lichtleiters 1 einzutragen und dadurch an den gewünschten Stellen die Ausbildung der Lichtumlenkstrukturen 3 zu bewirken. Durch den Energieeintrag wird das Lichtleitermaterial lokal aufgeschmolzen und danach wieder abgekühlt. Die Herstellung der Lichtumlenkstrukturen 3 kann vor dem Anbringen der Deckschicht 8 am Lichtleiter 1 erfolgen oder das Laserlicht kann, wie in der Figur 4 gezeigt, durch die Deckschicht 8 hindurch in den Lichtleiter 1 eingestrahlt werden. Vorzugsweise wird das Laserlicht derart entsprechend der Figur 4 in den Lichtleiter 1 eingestrahlt, dass der Laserstrahl senkrecht zur Lichtauskoppelfläche 2 in den Lichtleiter 1 eindringt.

Zur Ausleuchtung bei einer bestimmungsgemässen Verwendung des Lichtleiters 1 wird das Licht von einer oder mehreren Lichtquellen 10 bevorzugt seitlich in den Lichtleiter 1 eingestrahlt, das heisst derart, dass es aus einer ungefähr senkrecht zu den Längsachsen 6 stehenden Richtung auf die Lichtumlenkstrukturen 3 trifft. Alternativ oder zusätzlich kann eine oder mehrere Lichtquellen auch im Lichtleiter 1 eingebettet sein. Bei der oder den Lichtquellen 10 kann es sich insbesondere um LED-Lichtquellen handeln.

Um eine gleichmässige Ausleuchtung der Lichtauskoppelfläche 2 zu erreichen, sind die Lichtumlenkstrukturen 3 bevorzugt jeweils gleich ausgebildet und bevorzugt in regelmässigen Abständen zueinander angeordnet.

Um eine ungleichmässige Ausleuchtung der Lichtauskoppelfläche 2 mit einer variierenden Helligkeitsverteilung zu erreichen, können die Lichtumlenkstrukturen in entsprechend unregelmässigen Abständen zueinander im Lichtleiter 1 angeordnet sein. Sie können aber auch in regelmässigen Abständen, das heisst in einem regelmässigen Raster angeordnet sein und dafür geometrisch unterschiedlich ausgestaltet und/oder dimensioniert sein, um die gewünschte variierende Helligkeitsverteilung zu erreichen. Drei unterschiedlich ausgestaltete und dimensionierte Lichtumlenkstrukturen 3, welche im vorliegenden Fall alle einteilig ausgebildet sind, sind beispielhaft in der Detailansicht der Figur 4 unten dargestellt. So können die Lichtumlenkstrukturen 3 zum Beispiel unterschiedliche Längen und Dicken ihrer Verdickungen 5 aufweisen, was durch unterschiedliche Energieeinträge mittels des Lasers 9 einfach erreicht werden kann. Die Lichtumlenkstrukturen 3 können auch derart hergestellt werden, dass sie unterschiedlich viele Fahnen 7a, 7b aufweisen. Die Lichtumlenkstrukturen 3 können auch auf unterschiedlichen Höhen und/oder in unterschiedlichen Ausrichtungen im Lichtleiter 1 angeordnet sein.

Die Figuren 5 und 6 zeigen mikroskopische Aufnahmen eines real hergestellten, erfindungsgemässen Lichtleiters. Für die Herstellung der Lichtumlenkstrukturen 3, welche im vorliegenden Fall alle einteilig ausgebildet sind, wurde ein grüner Laser der Herstellerfirma Coherent GmbH, 64807 Dieburg, Deutschland, verwendet. Es handelte sich dabei um das Modell Hyperrapid 25, welches eine maximale Ausgangsleistung von 25 W (Watt) aufweist. Die Pulsdauer der Laserpulse betrug 10 ps (Pikosekunden) und die Wellenlänge 532 nm. Dabei wurde mittels einer 100 mm Optik fokussiert, was einem Spotdurchmesser von ca. 10 µm entspricht. Der grüne Laser wurde mit einer Leistung von ca. 5W (Watt) betrieben.

Wie aus den Figuren 5 und 6 ersichtlich ist, konnte auf diese Weise eine Vielzahl von Lichtumlenkstrukturen 3 erzeugt werden. Die in den Figuren 5 und 6 gezeigten Lichtumlenkstrukturen 3 weisen jeweils eine ähnliche Ausgestaltung wie diejenigen der Figuren 1 bis 4 auf. Im Unterschied zu den Lichtumlenkstrukturen 3 der Figuren 1 bis 4 weisen die real erzeugten Lichtumlenkstrukturen 3 der Figuren 5 und 6 jeweils mehr als zwei Fahnen auf. Es sind bei allen Lichtumlenkstrukturen 3 zumindest drei Fahnen 7a, 7b und 7c sowie allenfalls weitere Fahnen erkennbar. Zumindest zwei der drei Fahnen 7a, 7b und 7c sind auf einander im Wesentlichen diametral gegenüberliegenden Seiten des Grundkörpers 4 angeordnet und bewirken dadurch eine besonders grosse für die Lichtumlenkung massgebende Oberfläche.

In der Figur 5 sind jeweils die Verdickungen 5 der Grundkörper 4 der Lichtumlenkstrukturen 3 sichtbar. Es ist sind insbesondere die senkrecht zu den Längsachsen 6 stehenden Querschnittsflächen der Verdickungen 5 sichtbar. Dabei ist gut zu erkennen, dass diese Querschnittsflächen jeweils kreisförmig ausgebildet sind, das heisst von einer äusseren Begrenzungslinie umrandet sind, welche zumindest annähernd einen Kreis bildet.

Bei den Versuchen hat sich gezeigt, dass die Gesamtlänge der Lichtumlenkstrukturen 3 von der Laserenergie abhängt. Dasselbe gilt für den maximalen Radius d/2 der Verdickung 5. Die Lage der Verdickung 5 in Längsrichtung des Grundkörpers 4 ist jedoch weitgehend unabhängig von der Laserenergie bei 15 - 35 % der Gesamtlänge des Grundkörpers 4.

Beim Material des in den Figuren 5 und 6 gezeigten Lichtleiters 1 handelt es sich um Polymethylmethacrylat (PMMA), insbesondere um Plexiglas® 8N der Firma Evonik Industries AG (Kirschenallee, 64293 Darmstadt). Alternativ könnte es sich beim Material des Lichtleiters 1 aber zum Beispiel auch um Plexiglas® Film 0F058 der Firma Evonik Industries handeln.

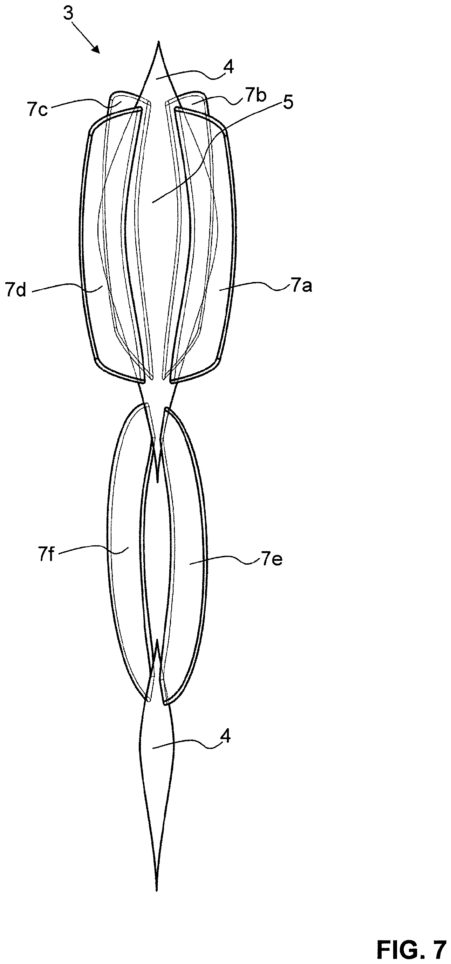

Die Figur 7 zeigt eine weitere mögliche Ausführungsform einer Lichtumlenkstruktur 3 eines erfindungsgemässen Lichtleiters 1. Der Lichtleiter 1 kann Lichtumlenkstrukturen entsprechend der in der Figur 1 gezeigten oder entsprechend der in der Figur 7 gezeigten Ausführungsform aufweisen. Er kann aber selbstverständlich auch verschiedene Lichtumlenkstrukturen 3, d.h. von beiden Ausführungsformen, aufweisen.

Die in der Figur 7 gezeigte Lichtumlenkstruktur 3 hat im Gegensatz zu derjenigen der Figur 1 einen zweiteiligen Grundkörper 4 mit zwei beabstandet zueinander angeordneten Teilen, welche via zwei Fahnen e, f miteinander verbunden sind. Die Lichtumlenkstruktur 3 der Figur 7 weist einen oberen Bereich auf, in welchem der erste Teil des Grundkörpers 4 angeordnet ist. An diesem ersten Teil des Grundkörpers 4, welcher eine Verdickung 5 bildet, sind vier Fahnen a, b, c, d angebracht. Die vier Fahnen a, b, c, d erstrecken sich jeweils nur im oberen Bereich der Lichtumlenkstruktur 3. Ein mittlerer Bereich der Lichtumlenkstruktur 3 weist zwei Fahnen e, f, welche an ihren oberen und unteren Enden jeweils miteinander verbunden sind, dazwischen jedoch beabstandet zueinander verlaufen. Da im mittleren Bereich der Lichtumlenkstruktur 3 kein Grundkörperteil vorhanden ist, befindet sich zwischen den beiden Fahnen e und f ein Leerraum. Die Lichtumlenkstruktur weist zudem einen unteren Bereich auf, welcher durch einen zweiten Teil des Grundkörpers 4 ohne daran angebrachte Fahnen gebildet wird. Der erste und der zweite Teil des Grundkörpers 4 sind somit beabstandet zueinander angeordnet.

Bei einer weiteren möglichen Ausführungsform werden die Lichtumlenkstrukturen 3 mittels eines Infrarot-Lasers hergestellt. Dazu kann insbesondere das Laser-Modell TruMicro 2030 des Herstellers Trumpf GmbH, Johann-Maus-Str. 2, 71254 Ditzingen, Deutschland verwendet werden. In einer insbesondere bevorzugten Ausführungsform wird dieses Laser-Modell bei einer maximalen Ausgangsleistung von 25 W, einer Pulsdauer von 1 ps, einer Wellenlänge von 1030 nm, einer F100 mm Optik, einem Spotdurchmesser von 20 µm und einer Pulsenergie von 20 µJ verwendet, um die Lichtumlenkstrukturen 3 im Lichtleiter 1 zu erzeugen. Alternativ könnte aber zum Beispiel auch das bereits erwähnte Modell Hyperrapid 25 von Coherent bei einer Pulsdauer von 10 ps und einer Wellenlänge von 1064 nm verwendet werden.

Gute Resultate wurden mit einem Infrarot-Laser beispielsweise erzielt bei einer Wellenlänge von 1030 nm, einer Pulsdauer von 1 ps und einer Pulsenergie von 10 - 15 µJ. Pro Lichtumlenkstruktur 3 ergibt sich dabei somit ein Leistungseintrag von 10 MW. Mit diesen Verfahrensparametern wurden Lichtumlenkstrukturen 3 erzeugt, welche keine Fahnen aufweisen und dadurch eine gleichmässigere Lichtumlenkung verursachen. Die erzeugten Lichtumlenkstrukturen 3 hatten jeweils eine Länge von 150 µm bis 300 µm und einen maximalen Durchmesser von 3 µm bis ca. 20 µm, wobei die äussere Form der Lichtumlenkstrukturen 3 jeweils derjenigen des in der Figur 2 gezeigten Grundkörpers 4 entsprach. Der Lichtleiter, innerhalb welchem die Lichtumlenkstrukturen 3 erzeugt wurden, ist beispielsweise aus dem Material Plexiglas® 8N der Firma Evonik hergestellt.

**BEZUGSZEICHENLISTE**

| | | | |
|---|---|---|---|
| 1 | Lichtleiter | 8 | Deckschicht |
| 2 | Lichtauskoppelfläche | 9 | Laser |
| 3, 3',3" | Lichtumlenkstruktur | 10 | Lichtquelle |
| 4 | Grundkörper | | |
| 5 | Verdickung | d1-d3 | Durchmesser |
| 6 | Längsachse | M1-M3 | Mittelpunkte |
| 7a-7f | Fahnen | A1-A3 | Abstände |

## Patentansprüche

1. Lichtleiter (1) mit einer Vielzahl von Lichtumlenkstrukturen (3), die im Inneren des Lichtleiters (1) angeordnet sind, wobei es sich beim Material des Lichtleiters (1) um Kunststoff handelt, und wobei die Lichtumlenkstrukturen (3) jeweils einen langgestreckten Grundkörper (4) aufweisen, welcher entlang seiner Längsrichtung um ein Vielfaches grösser dimensioniert ist als in die senkrecht zu dieser Längsrichtung stehenden Richtungen, wobei die Lichtumlenkstrukturen (3) durch eine lokale Aufschmelzung des Materials des Lichtleiters (1) hergestellt sind, **dadurch gekennzeichnet, dass** die Grundkörper (4) entlang ihrer Längsrichtung jeweils eine lokale Verdickung (5) aufweisen, welche in Bezug auf die Längsrichtung des Grundkörpers (4) bei 15 - 35 % der gesamten Längserstreckung des Grundkörpers (4) angeordnet ist.

2. Lichtleiter (1) nach Anspruch 1, wobei die Grundkörper (4) der Lichtumlenkstrukturen (3), insbesondere die Lichtumlenkstrukturen (3) als Ganzes, jeweils rotationssymmetrisch sind.

3. Lichtleiter (1) nach Anspruch 1 oder 2, wobei sich die Grundkörper (4) der Lichtumlenkstrukturen (3) entlang ihrer jeweiligen Längsrichtung parallel zueinander erstrecken.

4. Lichtleiter (1) nach einem der vorhergehenden Ansprüche, wobei die Lichtumlenkstrukturen (3) jeweils zumindest eine, insbesondere mehrere Fahnen (7a-7d) aufweisen, welche am Grundkörper (4) angebracht sind.

5. Lichtleiter (1) nach einem der vorhergehenden Ansprüche, wobei der Lichtleiter (1) eine Lichtauskoppelfläche (2) aufweist, und wobei die Grundkörper (4) der Lichtumlenkstrukturen (3) mit ihren Längsrichtungen jeweils senkrecht zu dieser Lichtauskoppelfläche (2) stehen.

6. Lichtleiter (1) nach einem der vorhergehenden Ansprüche, wobei die Grundkörper (4) der Lichtumlenkstrukturen (3) jeweils eine Längserstreckung von mindestens 100 µm, bevorzugt von mindestens 300 µm, aufweisen.

7. Lichtleiter (1) nach einem der vorhergehenden Ansprüche, wobei die Lichtumlenkstrukturen (3) in Abständen zueinander im Lichtleiter (1) angeordnet sind, und wobei die Abstände (A1, A2, A3) zwischen den Lichtumlenkstrukturen (3) jeweils mindestens 50 µm betragen, insbesondere 50 - 150 µm.

8. Lichtleiter (1) nach einem der vorhergehenden Ansprüche, wobei die Lichtumlenkstrukturen (3) derart im Lichtleiter (1) angeordnet sind, dass das von den Lichtumlenkstrukturen (3) ausgekoppelte Licht als ein Buchstabe, eine Nummer oder ein Symbol erscheint.

9. Lichtleiter (1) nach einem der vorhergehenden Ansprüche, wobei die verschiedenen Lichtumlenkstrukturen (3) unterschiedliche Geometrien, insbesondere unterschiedliche Längserstreckungen, aufweisen, so dass das via eine Lichtauskoppelfläche (2) des Lichtleiters (1) ausgekoppelte Licht eine Helligkeitsverteilung aufweist, welche über die Lichtauskoppelfläche (2) variiert.

10. Lichtleiter (1) nach einem der vorhergehenden Ansprüche, wobei es sich beim Kunststoff um Polymethylmethacrylat (PMMA), Polycarbonat (PC), Polyurethan (PU), Polyurea (PUA) oder Polymethacrylmethylimid (PMMI) handelt.

11. Lichtleiter (1) nach einem der vorhergehenden Ansprüche, bei welchem es sich um eine Folie handelt.

12. Lichtleiter (1) nach einem der vorhergehenden Ansprüche, wobei der Lichtleiter (1) für den Automobilbau und insbesondere zum Herstellen einer Einstiegsleiste vorgesehen ist.

13. Verfahren zur Herstellung eines Lichtleiters (1) nach einem der vorhergehenden Ansprüche, wobei ein aus einem Kunststoff hergestellter Lichtleiter (1) mit einem Laser (9) bestrahlt wird, um im Inneren des Lichtleiters (1) eine Vielzahl von Lichtumlenkstrukturen (3) mit jeweils einem langgestreckten Grundkörper (4) auszubilden, wobei der Lichtleiter (1) derart mit dem Laser (9) bestrahlt wird, dass an den Stellen der Lichtumlenkstrukturen (3) jeweils ein lokaler Wärmeeintrag bewirkt wird, welcher zu einer Materialaufschmelzung führt, **dadurch gekennzeichnet, dass** der Lichtleiter (1) mit grünem Laserlicht in einem Wellenlängenbereich von 490 nm - 575 nm und/oder mit Infrarot-Laserlicht in einem Wellenlängenbereich von 780 nm - 1400 nm bestrahlt wird, um an den Grundkörpern (4) entlang ihrer Längsrichtung jeweils eine lokale Verdickung (5) auszubilden, welche in Bezug auf die Längsrichtung des Grundkörpers (4) bei 15 - 35 % der gesamten Längserstreckung des Grundkörpers (4) angeordnet ist.

## Claims

1. Light guide (1) with a plurality of light deflecting structures (3), which are arranged inside the light guide (1), wherein the material of the light guide (1) is plastic, and wherein the light deflecting structures (3) each have an elongated base body (4) which is dimensioned many times larger along its longitudinal direction as in the directions perpendicular to this longitudinal direction, wherein the light deflecting structures (3) are produced by a local melting of the material of the light guide (1), **characterized in that** the base bodies (4) each have a local thickening (5) along their longitudinal direction, which is arranged at 15-35% of the total length of the base body (4) in relation to the longitudinal direction of the base body (4).

2. Light guide (1) according to claim 1, wherein the base bodies (4) of the light deflecting structures (3), in particular the light deflecting structures (3) as a whole, are each rotationally symmetrical.

3. Light guide (1) according claim 1 or 2, wherein the base bodies (4) of the light deflecting structures (3) extend parallel to one another along their respective longitudinal direction.

4. The light guide (1) according to one of the preceding claims, wherein the light deflecting structures (3) each have at least one, in particular a plurality of vanes (7a-7d) which are attached to the base body (4).

5. Light guide (1) according to one of the preceding claims, wherein the light guide (1) comprises a light decoupling surface (2), and wherein the base bodies (4) of the light deflecting structures (3) are each perpendicular to this light decoupling surface (2) with their longitudinal directions.

6. Light guide (1) according to one of the preceding claims, wherein the base bodies (4) of the light deflecting structures (3) each have a longitudinal extension of at least 100 µm, preferably of at least 300 µm.

7. Light guide (1) according to one of the preceding claims, wherein the light deflecting structures (3) are arranged in the light guide (1) at distances from one another, and wherein the distances (A1, A2, A3) between the light deflecting structures (3) are at least 50 µm, in particular 50-150 µm, in each case.

8. Light guide (1) according to one of the preceding claims, wherein the light deflecting structures (3) are arranged in the light guide (1) in such a way that the light coupled out by the light deflecting structures (3) appears as a letter, a number or a symbol.

9. Light guide (1) according to one of the preceding claims, wherein the different light deflecting structures (3) have different geometries, in particular different longitudinal extensions, so that the light decoupled via a light decoupling surface (2) of the light guide (1) has a brightness distribution which over the light decoupling surface (2) varies.

10. Light guide (1) according to one of the preceding claims, wherein the plastic is polymethyl methacrylate (PMMA), polycarbonate (PC), polyurethane (PU), polyurea (PUA) or polymethacrylmethylimide (PMMI).

11. Light guide (1) according to one of the preceding claims, which is a foil.

12. Light guide (1) according to one of the preceding claims, wherein the light guide (1) is provided for automobile construction and in particular for the production of a door sill.

13. Method for producing a light guide (1) according to one of the preceding claims, wherein a light guide (1) made of plastic is irradiated with a laser (9) in order to create a plurality of light deflecting structures (3) each with an elongated base body (4) inside the light guide (1), wherein the light guide (1) is irradiated in such a way with the laser (9) that at the positions of the light deflecting structures (3) in each case a local heat input is effected, which leads to a material melting, **characterized in that** the light guide (1) is irradiated with green laser light in a wave length range of 490 nm -575 nm and/or with infrared laser light in a wave length range of 780 nm - 1400 nm, in order to create a local thickening (5) on the base bodies (4) along of their longitudinal direction in each case, which local thickening (5) is arranged at 15-35% of the total length of the base body (4) in relation to the longitudinal direction of the base body (4).

## Revendications

1. Guide de lumière (1) avec une pluralité de structures de déviation de la lumière (3), qui sont disposées à l'intérieur du guide de lumière (1), dans lequel le matériau du guide de lumière (1) est une résine, et dans lequel les structures de déviation de la lumière (3) présentent chacune un corps de base allongé (4), qui le long de sa direction longitudinale est dimensionné plusieurs fois plus grand que dans les directions orientées perpendiculairement à cette direction longitudinale, dans lequel
les structures de déviation de la lumière (3) sont produites par un une fusion locale du matériau du guide de lumière (1), **caractérisé en ce que**
les corps de base (4) présentent respectivement, le long de leur direction longitudinale, un épaississement (5), lequel est agencé au niveau de 15 à 35% de l'étendue longitudinale totale du corps de base (4) par rapport à la direction longitudinale du corps de base (4).

2. Guide de lumière (1) selon la revendication 1, dans lequel les corps de base (4) des structures de déviation de la lumière (3), en particulier les structures de déviation de la lumière (3) en entier, sont respectivement symétriques en rotation.

3. Guide de lumière (1) selon la revendication 1 ou 2, dans lequel les corps de base (4) des structures de déviation de la lumière (3) s'étendent parallèlement les uns aux autres le long de leur direction longitudinale respective.

4. Guide de lumière (1) selon l'une des revendications précédentes, dans lequel les structures de déviation de la lumière (3) ont chacune au moins un, en particulier une pluralité de drapeaux (7a-7d), qui sont fixés au corps de base (4).

5. Guide de lumière (1) selon l'une des revendications précédentes, dans lequel le guide de lumière (1) présente une surface de découplage de lumière (2), et dans lequel les corps de base (4) des structures de déviation de la lumière (3) sont respectivement perpendiculaires à cette surface de découplage de lumière (2) selon leurs directions longitudinales.

6. Guide de lumière (1) selon l'une des revendications précédentes, dans lequel les corps de base (4) des structures de déviation de la lumière (3) présentent respectivement une étendue longitudinale d'au moins 100 µm, de préférence d'au moins 300 µm.

7. Guide de lumière (1) selon l'une des revendications précédentes, dans lequel les structures de déviation de la lumière (3) sont disposées dans le guide de lumière (1) à des distances les unes des autres, et où les distances (A1, A2, A3) entre les structures de déviation de la lumière (3)) sont respectivement au moins 50 µm, en particulier de 50 à 150 µm.

8. Guide de lumière (1) selon l'une des revendications précédentes, dans lequel les structures de déviation de la lumière (3) sont disposées dans le guide de lumière (1) de telle sorte que la lumière découplée des structures de déviation de la lumière (3) apparaît sous la forme d'une lettre, d'un nombre ou d'un symbole.

9. Guide de lumière (1) selon l'une des revendications précédentes, dans lequel les différentes structures de déviation de la lumière (3) présentent des géométries différentes, en particulier des étendues longitudinales différentes, de sorte que la lumière découplée via une surface de découplage de lumière (2) du guide de lumière (1) présente une distribution de luminosité qui varie sur la surface de découplage de lumière (2).

10. Guide de lumière (1) selon l'une des revendications précédentes, dans lequel la résine est du poly(méthacrylate de méthyle) (PMMA), polycarbonate (PC), polyuréthane (PU), polyurée (PUA), ou du poly(méthacrylimide de méthyl) (PMMI).

11. Guide de lumière (1) selon l'une des revendications précédentes, dans lequel il s'agit d'un film.

12. Guide de lumière (1) selon l'une des revendications précédentes, dans lequel le guide de lumière (1) est prévu pour la construction automobile et en particulier pour la réalisation d'un seuil de porte.

13. Procédé de production d'un guide de lumière (1) selon l'une quelconque des revendications précédentes, dans lequel un guide de lumière (1) réalisé en résine est irradié avec un laser (9), afin de créer une pluralité de structures de déviation de la lumière (3) à l'intérieur du guide de lumière (1) ayant chacune un corps de base allongé (4),
dans lequel
le guide de lumière (1) est irradié de telle sorte avec le laser (9) qu'au niveau de ces endroits des structures de déviation de la lumière (3), un apport de chaleur est respectivement provoqué, lequel conduit à une fusion du matériau, **caractérisé en ce que** le guide de lumière (1), est irradié avec une lumière laser verte ayant une longueur d'onde dans la plage de 490 nm à 575 nm et/ou avec une lumière laser infrarouge ayant une longueur d'onde dans la plage de 780 nm à 1400 nm, afin de réaliser respectivement, au niveau des corps de base (4), le long de leur direction longitudinale, un épaississement (5) local, lequel est agencé au niveau de 15 à 35% de l'étendue longitudinale totale du corps de base (4) par rapport à la direction longitudinale du corps de base (4).
